(19) Europäisches Patentamt
European Patent Office
Office européen des brevets

(11) **EP 4 280 471 A1**

(12) **EUROPEAN PATENT APPLICATION**
published in accordance with Art. 153(4) EPC

(43) Date of publication:
**22.11.2023 Bulletin 2023/47**

(21) Application number: **22739697.5**

(22) Date of filing: **13.01.2022**

(51) International Patent Classification (IPC):
**H04B 7/06** (2006.01)    **H04B 7/08** (2006.01)
**H04W 72/12** (2023.01)    **H04W 72/04** (2023.01)

(52) Cooperative Patent Classification (CPC):
**H04B 7/06; H04B 7/08; H04W 72/04; H04W 72/12**

(86) International application number:
**PCT/KR2022/000606**

(87) International publication number:
**WO 2022/154502 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.01.2021 KR 20210005505
31.01.2021 US 202163143915 P**

(71) Applicant: **LG Electronics Inc.
Yeongdeungpo-gu
Seoul 07336 (KR)**

(72) Inventors:
• **CHUNG, Jaehoon
  Seoul 06772 (KR)**
• **KANG, Jiwon
  Seoul 06772 (KR)**
• **KIM, Kyuseok
  Seoul 06772 (KR)**
• **GO, Seongwon
  Seoul 06772 (KR)**
• **BAE, Duckhyun
  Seoul 06772 (KR)**

(74) Representative: **Frenkel, Matthias Alexander
Wuesthoff & Wuesthoff
Patentanwälte PartG mbB
Schweigerstraße 2
81541 München (DE)**

(54) **METHOD AND DEVICE FOR APPLYING SPATIAL PARAMETER IN WIRELESS COMMUNICATION SYSTEM**

(57) Disclosed are a method and device for transmitting/receiving a downlink channel from multiple transmission/reception points in a wireless communication system. A method for a terminal to receive a downlink channel in a wireless communication system according to an embodiment of the present disclosure comprises the steps of: receiving a downlink control channel on the basis of two or more transmission configuration indicator (TCI) states associated with one or more control resource sets (CORESETs); and receiving a downlink data channel on the basis of the two or more TCI states associated with one or more CORESETs, on the basis of TCI information not being included in downlink control information (DCI) received through the downlink control channel, wherein the two or more TCI states may be mapped to the downlink data channel on the basis of a prescribed mapping scheme.

FIG. 7

Start

Provide at least one DCI including first spatial parameter information for first channel and second spatial parameter information for second channel — S710

Transmit or receive first channel based on first spatial parameter at least after first offset from first reference time point — S720

Transmit or receive second channel based on second spatial parameter at least after second offset from second reference time point — S730

End

**Description**

[Technical Field]

The present disclosure relates to a wireless communication system, and more particularly, to a method and apparatus for applying a spatial parameter in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device for applying a spatial parameter based on a dynamic indication in a wireless communication system.

An additional technical problem of the present disclosure is to provide a method and a device for determining a time point when a spatial parameter is applied based on a dynamic indication in a wireless communication system.

An additional technical problem of the present disclosure is to provide a method and a device for effectively supporting a dynamic change/update of a spatial parameter by determining an application time of a spatial parameter according to a state of a terminal in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for transmitting or receiving a channel by a terminal in a wireless communication system according to an aspect of the present disclosure may include receiving from a base station at least one downlink control information (DCI) including first spatial parameter information for a first channel and second spatial parameter information for a second channel; performing transmission or reception for the first channel based on the first spatial parameter information at least after a first offset from a first reference time point; and performing transmission or reception for the second channel based on the second spatial parameter information at least after a second offset from a second reference time point.

A method for performing channel transmission or reception by a base station in a wireless communication system according to an additional aspect of the present disclosure may include transmitting to a terminal at least one downlink control information (DCI) including first spatial parameter information for a first channel and second spatial parameter information for a second channel; performing transmission or reception for the first channel based on the first spatial parameter information at least after a first offset from a first reference time point; and performing transmission or reception for the second channel based on the second spatial parameter information at least after a second offset from a second reference time point.

[Technical Effects]

According to the present disclosure, a method and a device for applying a spatial parameter based on a dynamic indication in a wireless communication system may be provided.

According to the present disclosure, a method and a device for determining a time point when a spatial parameter is applied based on a dynamic indication in a wireless communication system may be provided.

According to the present disclosure, a method and a device for effectively supporting a dynamic change/update of a spatial parameter by determining an application time of a spatial parameter according to a state of a terminal in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a flowchart for describing a method of dynamically indicating and applying a spatial parameter according to the present disclosure.
FIG. 8 is a diagram for describing a time point when a spatial parameter is applied according to an embodiment of the present disclosure.
FIG. 9 is a diagram for describing a variety of examples of the present disclosure for a time point when a spatial parameter is applied.
FIG. 10 is a diagram for illustrating a signaling process according to an embodiment of the present disclosure.
FIG. 11 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

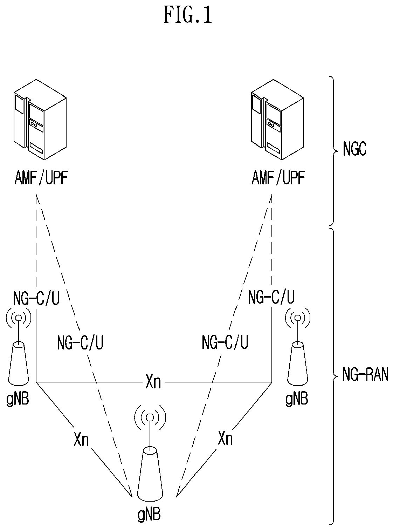

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

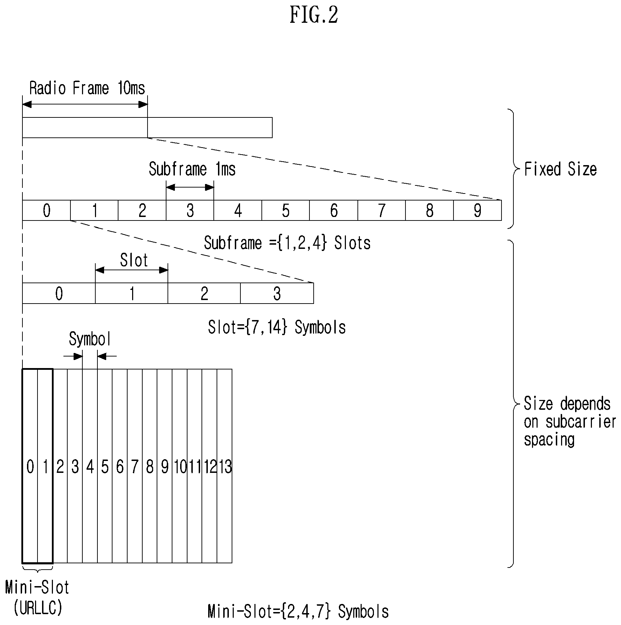

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf+2^μ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}·N_f)$. Here, $\Delta f_{max}$ is $480·10^3$ Hz and $N_f$ is 4096. Downlink and uplink transmission is configured (organized) with a radio frame having a duration of $T_f=1/(\Delta f_{max}N_f/100)·T_c=10ms$. Here, a radio frame is configured with 10 subframes having a duration of $T_{sf}=(\Delta f_{max}N_f/1000)·T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0,..., N_{slot}^{subftame,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subftame,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{ftame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{ftame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

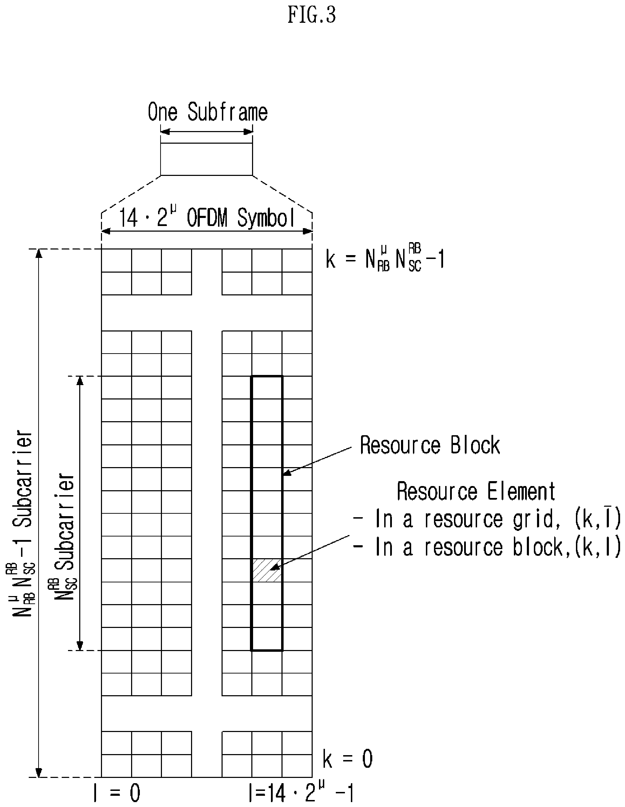

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,..,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,..,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

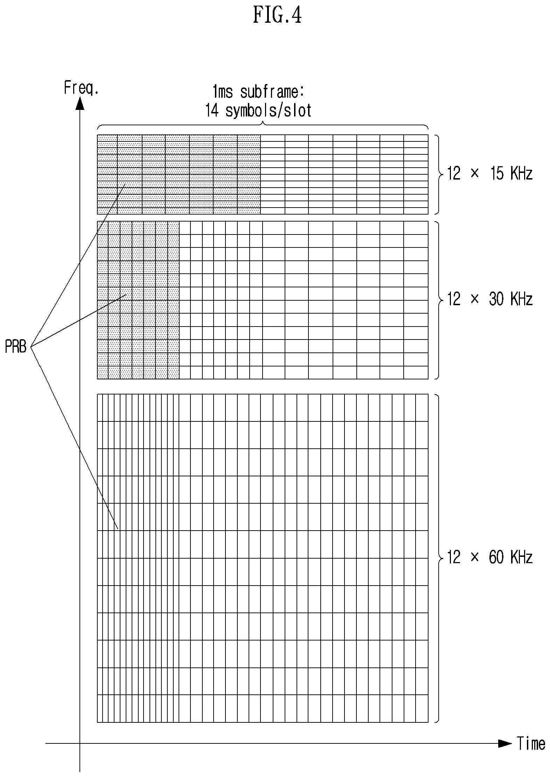

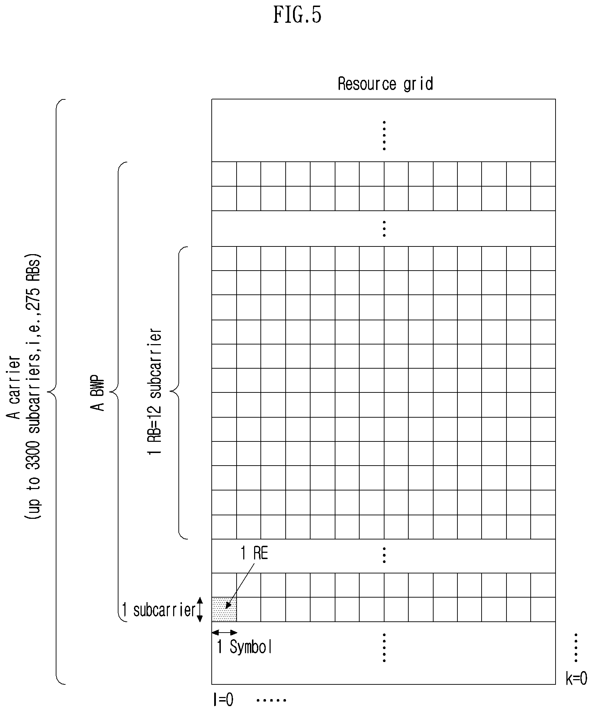

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP (Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/LTL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/LTL BWP (by L1 signaling or MAC CE or RRC signaling, etc.). Alternatively, based on a timer, when a timer value is expired, it may be switched to a determined DL/LTL BWP. Here, an activated DL/LTL BWP is defined as an active DL/UL BWP. But, a configuration on a DL/LTL BWP may not be received when a terminal performs an initial access procedure or before a RRC connection is set up, so a DL/LTL BWP which is assumed by a terminal under these situations is defined as an initial active DL/LTL BWP.

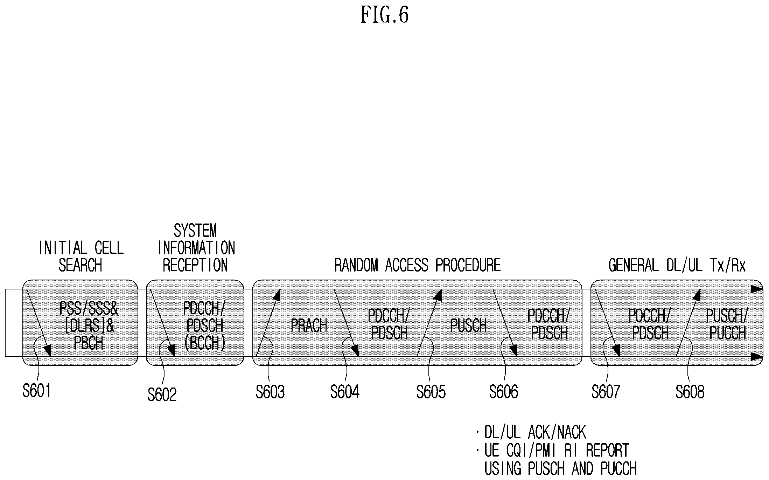

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(LTL) transmission/reception, it may include the following procedures and terms.

Beam measurement: An operation that a base station or a UE measures a property of a received beamformed signal

Beam determination: An operation that a base station or a UE selects its Tx beam / Rx beam

Beam sweeping: An operation that a spatial region is covered by using a Tx and/or Rx beam for a certain time interval in a pre-determined method

Beam report: An operation that a UE reports information of a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Quasi-co Location (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

When HARQ-ACK corresponding to a PDSCH carrying an activation command is transmitted in a slot n, mapping indicated between a TCI state and a codepoint of a DCI field 'Transmission Configuration Indication' may be applied by starting from a slot $n+3N_{slot}^{subftame,\mu}+1$ After UE receives an initial higher layer configuration for TCI states before receiving an activation command, UE may assume for QCL-TypeA, and if applicable, for QCL-TypeD that a DMRS port of a PDSCH of a serving cell is quasi-colocated with a SS/PBCH block determined in an initial access process.

When a higher layer parameter (e.g., tci-PresentInDCI) indicating whether there is a TCI field in DCI configured for UE is set to be enabled for a CORESET scheduling a PDSCH, UE may assume that there is a TCI field in DCI format 1_1 of a PDCCH transmitted in a corresponding CORESET. When tci-PresentInDCI is not configured for a CORESET scheduling a PDSCH or when a PDSCH is scheduled by DCI format 1_0 and a time offset between reception of DL DCI and a corresponding PDSCH is equal to or greater than a predetermined threshold (e.g., timeDurationForQCL), in order to determine a PDSCH antenna port QCL, UE may assume that a TCI state or a QCL assumption for a PDSCH is the same as a TCI state or a QCL assumption applied to a CORESET used for PDCCH transmission. Here, the predetermined threshold may be based on reported UE capability.

When a parameter tci-PresentInDCI is set to be enabled, a TCI field in DCI in a scheduling CC (component carrier) may indicate an activated TCI state of a scheduled CC or a DL BWP. When a PDSCH is scheduled by DCI format 1_1, UE may use a TCI-state according to a value of a 'Transmission Configuration Indication' field of a detected PDCCH having DCI to determine a PDSCH antenna port QCL.

When a time offset between reception of DL DCI and a corresponding PDSCH is equal to or greater than a predetermined threshold (e.g., timeDurationForQCL), UE may assume that a DMRS port of a PDSCH of a serving cell is quasi-colocated with RS(s) in a TCI state for QCL type parameter(s) given by an indicated TCI state.

When a single slot PDSCH is configured for UE, an indicated TCI state may be based on an activated TCI state of a slot having a scheduled PDSCH.

When multiple-slot PDSCHs are configured for UE, an indicated TCI state may be based on an activated TCI state of a first slot having a scheduled PDSCH and UE may expect that activated TCI states across slots having a scheduled PDSCH are the same.

When a CORESET associated with a search space set for cross-carrier scheduling is configured for UE, UE may expect that a tci-PresentInDCI parameter is set to be enabled for a corresponding CORESET. When one or more TCI states are configured for a serving cell scheduled by a search space set including QCL-TypeD, UE may expect that a time offset between reception of a PDCCH detected in the search space set and a corresponding PDSCH is equal to or greater than a predetermined threshold (e.g., timeDurationForQCL).

For both of a case in which a parameter tci-PresentInDCI is set to be enabled and a case in which tci-PresentInDCI is not configured in a RRC connected mode, when a time offset between reception of DL DCI and a corresponding PDSCH is less than a predetermined threshold (e.g., timeDurationForQCL), UE may assume that a DMRS port of a PDSCH of a serving cell is quasi-colocated with RS(s) for QCL parameter(s) used for PDCCH QCL indication of a CORESET associated with a monitored search space having the lowest CORESET-ID in the latest slot where one or more CORESETs in an activated BWP of a serving cell is monitored by UE.

In this case, when QCL-TypeD of a PDSCH DMRS is different from QCL-TypeD of a PDCCH DMRS and they are overlapped in at least one symbol, UE may expect that reception of a PDCCH associated with a corresponding CORESET will be prioritized. It may be also applied to intra-band CA (carrier aggregation) (when a PDSCH and a CORESET exist in a different CC). When any of configured TCI states does not include QCL-TypeD, a different QCL assumption may be obtained from TCI states indicated for a scheduled PDSCH, regardless of a time offset between reception of DL DCI and a corresponding PDSCH.

Timing of applying spatial parameter

Hereinafter, various examples of the present disclosure for timing of applying a spatial parameter will be described.

A spatial parameter (or a parameter related to beam transmission/reception) related to downlink transmission/reception may include QCL information applied to a physical channel through which downlink control information or data is transmitted and received or assumed by the terminal. The QCL information may include QCL reference signal (RS) information, and the QCL RS information may be configured for each QCL type (e.g., QCL type A/B/C/D). For example, downlink control information (DCI) may be transmitted and received through PDCCH, and a spatial parameter related to DCI transmission/reception may include QCL reference information for PDCCH DMRS antenna port(s), TCI state information, etc. In addition, downlink data may be transmitted and received through PDSCH, and a spatial parameter related to downlink data transmission/reception may include QCL reference information for PDSCH DMRS antenna port(s), TCI state information, etc.

However, in the present disclosure, the term spatial parameter is not limited to QCL information and may include a spatial parameter applied to uplink transmission (e.g., spatial relation info related to an uplink transmission beam). For example, uplink control information (UCI) may be transmitted/received through PUCCH and/or PUSCH, and a spatial parameter related to UCI transmission/reception may include PRI (PUCCH resource indicator), SRI, spatial relation info, UL TCI state related to PUCCH/PUSCH transmission/reception, or QCL reference RS related to thereof, etc.

In addition, a spatial parameter may be separately set for downlink or uplink, or may be configured integrally for downlink and uplink.

In addition, a spatial parameter may also be defined or configured as a spatial parameter set including at least one spatial parameter. Hereinafter, in order to simplify the description, at least one spatial parameter is collectively referred to as a spatial parameter.

In the following description, spatial parameter or spatial relation info may mean including RS information/QCL related (or reference) RS information/QCL parameters, TCI state or the like for spatial related assumption for data/signal transmitted/received through UL channel/DL channel (hereinafter, DL/LTL channel/signal), or may be expressed by being mixed/replaced by the above terms.

In the following examples, the meaning of using/applying/mapping a specific spatial parameter (or TCI state or TCI) when transmitting/receiving data/DCI/UCI for a certain frequency/time/spatial resource is that in the case of DL estimating a channel from DMRS using the QCL type and QCL RS indicated by the corresponding spatial parameter in corresponding frequency/time/spatial resources and receiving/demodulating data/DCI (e.g., PDSCH/PDCCH) with the estimated channel and in the case of UL transmitting/modulating DMRS and data/UCI (e.g., PUSCH/PUCCH) using transmission beam and/or transmission power indicated by the corresponding spatial parameter in corresponding frequency/time/spatial resources.

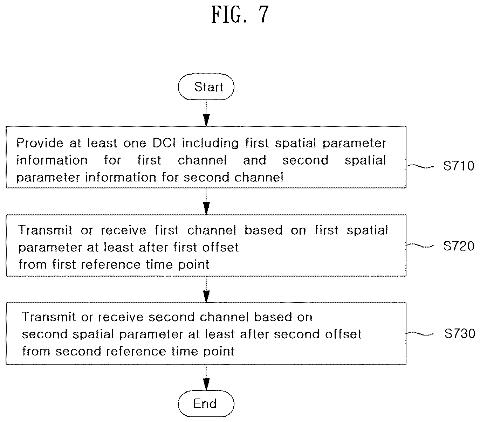

FIG. 7 is a flowchart for describing a method of dynamically indicating and applying a spatial parameter according to the present disclosure.

In S710, a terminal may receive at least one DCI from a base station. In other words, a base station may transmit at least one DCI to a terminal. At least one DCI may include first spatial parameter information on a first channel and second spatial parameter information on a second channel. A first and second spatial parameter may be provided from a base station to a terminal jointly or through one DCI or may be provided from a base station to a terminal separately or through each DCI. A first and second spatial parameter may be independently indicated or may be commonly indicated (or may be indicated separately, but through one integrated field).

In S720, transmission/reception for a first channel between a terminal and a base station may be performed based on a first spatial parameter at least after a first offset from a first reference time point. In S730, transmission/reception for a second channel between a terminal and a base station may be performed based on a second spatial parameter at least after a second offset from a second reference time point.

A first offset may include at least one of a first indication application timing (e.g., X), a first minimum beam application timing (e.g., T_1), or a first panel activation timing (e.g., T_panel_1). A second offset may include at least one of a second indication application timing (e.g., Y), a second minimum beam application timing (e.g., T_2), or a second panel activation timing (e.g., T_panel_2).

For example, a first indication application timing and the second indication application timing may be predefined or preconfigured separately or commonly.

For example, at least one of a first minimum beam application timing or a first panel activation timing may be preconfigured or predefined based on a capability of a terminal. Additionally or alternatively, at least one of a second minimum beam application timing or a first panel activation timing may be preconfigured or predefined based on capability reporting of a terminal.

For example, at least one of a first reference time point or a second reference time point may correspond to a time point when at least one DCI is received last in a terminal. Additionally or alternatively, at least one of a first reference time point or a second reference time point may correspond to a time point when a terminal transmits HARQ-ACK information for at least one DCI.

For example, a first channel may include a downlink channel and a second channel may include an uplink channel. Alternatively, a first channel may include a PDSCH and an A/N PUCCH and a second channel may include at least one channel other than a first channel.

When a time point after a first offset is positioned between a start time point and an end time point of the first channel: (1) transmission or reception of a first channel may be performed based on a previous spatial parameter from a start time point until a time point after a first offset and transmission or reception of a first channel may be performed based on a first spatial parameter from a time point after a first offset until an end time point; or (2) transmission or reception of a first channel may be performed based on a previous spatial parameter from a start time point until an end time point and a first spatial parameter may be applied to additional transmission or reception of a first channel after an end time point; or (3) transmission or reception of a first channel may be performed based on a first spatial parameter from a start time point until an end time point, or (4) transmission or reception for a first channel may not be performed (or may be dropped). Alternatively, a time point after a first offset may be configured not to be positioned between a start time point and an end time point of the first channel, or a terminal may operate without expecting (or excluding) such a configuration.

Hereinafter, detailed examples of the present disclosure related to indicating and applying spatial parameter will be described.

First, an updating scheme of a DL spatial parameter (or DL TCI state) through DCI in a conventional NR beam management operation will be described. For up to 128 candidate (candidate) TCI states configured by RRC, 8 of them may be activated (or down-selected) by MAC-CE, and may be mapped to codepoints of the TCI field of DL DCI. In this regard, by the TCI field of the DL DCI for scheduling of the subsequent PDSCH, one of the TCI states activated by the MAC CE may be dynamically indicated.

Next, a UL spatial parameter (or UL TCI) framework will be described. Basically, in order for the base station to indicate to the terminal a transmission beam to be used when the terminal transmits a UL channel, spatialRelationInfo may be used. The base station may configure/indicate DL RS (e.g., SSB-RI (resource indicator), (periodic/semi-persistent/aperiodic) CRI(CSI-RS resource indicator)), or an SRS resource to the terminal as a reference RS for the target UL channel and/or the target RS through RRC configuration. Through this, the base station may indicate which UL transmission beam to use when the corresponding terminal transmits PUCCH and/or SRS. In addition, when the base station schedules the PUSCH to the terminal through UL DCI, the SRS transmission beam indicated by the base station may be indicated as a transmission beam for PUSCH transmission through the SRI field, and the SRS transmission beam may be used as a PUSCH transmission beam of the terminal.

A timeline related to a spatial parameter (or beam) change according to an indication of a spatial parameter is as follows.

A terminal may report to a base station as a terminal capability a time required for a beam change when performing reception beamforming. In particular, beamSwitchTiming(BST), a time required from a triggering DCI reception time point for an aperiodic (AP) CSI-RS to an AP CSI-RS reception time point, may be reported respectively per SCS. In addition, when a terminal has a plurality of DL Rx panels, it takes time to change a panel or activate other panel which was deactivated to perform reception of a corresponding CSI-RS after DCI reception and a subsequent operation accordingly (e.g., CSI reporting, beam management, time/frequency tracking, etc.) (e.g., 224, 336 symbols, etc.). It may be seen that these values include a value which may be reported by a terminal in consideration of panel activation/switching delay. In other words, it may be seen that a BST value is configured with a sum of a time required for DCI interpretation of a terminal and a time required for panel activation/switching. In addition, timeDurationForQCL is a threshold which changes a QCL assumption of a PDSCH according to a time from DCI reception to a PDSCH reception time point. For a decision thereon, when a terminal reports a terminal capability value as a value equal to or greater than a certain value, a specific prescribed value is applied. Here, a specific prescribed value may be defined differently according to a capability or a CP length, etc. of a terminal or per SCS.

In addition, a unified TCI framework may include that a UL/DL spatial parameter (e.g., a UL/DL TCI state) is jointly/separately indicated/applied. Accordingly, a common/separate beam update operation for multiple channels/RSs may be supported. For example, when TCI state(s) that a specific reference DL/LTL RS is configured by QCL-TypeD RS/spatial relation info is indicated through DCI (i.e., a source RS is indicated), a terminal may change/update target channel(s)/RS(s) by a reception/transmission beam corresponding to a reference RS (i.e., a source RS).

In addition, DCI may be used as a signaling method for the above-described common/separate beam update operation. For it, a DCI format, a DL/LTL beam indication method, a time point of applying DL/LTL beam indication DCI, a time point of applying a changed beam, etc. need to be determined.

As described above, for a joint DL/LTL spatial parameter indication, a common spatial parameter may be indicated through DCI and for a separate DL/LTL spatial parameter indication, a corresponding spatial parameter may be indicated through a spatial parameter indication field in DCI (e.g., a TCI field or a SRI field). As above, when a spatial parameter is indicated through DCI, the minimum time required for spatial parameter change/update of a terminal may be defined. In the present disclosure, it is assumed that for changing/updating a spatial parameter, a time of a T_DL length is at least required for a DL and a time of T_UL is at least required for an UL, and T_DL and U_DL may have an independent value. In other words, T_DL and U_DL may have the same value or a different value.

Unlike a method of indicating each spatial parameter for an UL and a DL through UL DCI and DL DCI, when an UL/DL spatial parameter is simultaneously indicated through one DCI, an application time point of a spatial parameter indication for each of an UL and a DL needs to be configured by considering a terminal capability, importance according to data scheduling, etc. Hereinafter, for clarity of a description, a time length or a time point when a change/update indication for a spatial parameter is applied is referred to as an indication application timing (IAT). A IAT may mean a time point when a terminal may process, confirm and apply an indication for a spatial parameter.

In addition, after applying an UL/DL spatial parameter indication, a time for changing/updating a spatial parameter is required for subsequent UL/DL transmission or reception accordingly. Hereinafter, for clarity of a description, by assuming an example that a spatial parameter is a beam, a time length or a time point when a changed/updated beam is applied is referred to as a beam application timing (BAT). For example, when a terminal is a multi-panel terminal (MPUE) having a plurality of transmission/reception panels, in order to perform change/update into a transmission/reception beam indicated in DCI, a time for activating other panel which was deactivated or changing into a corresponding panel is required. Accordingly, a different BAT needs to be applied according to a terminal capability. A BAT may correspond to T_DL/U_DL, a time required from a time point when a terminal processes and confirms an indication for a spatial parameter (i.e., an IAT) until applying an actually changed/updated spatial parameter (a time additionally required for panel activation/switching). Alternatively, a BAT may be defined as a value including at least one of a IAT, T_DL/U_DL, or a panel activation/switching time.

In other words, based on a specific time point related to a spatial parameter indication, UL/DL transmission or reception that an indicated spatial parameter is applied may be performed after a predetermined time from the reference time point.

Here, for a spatial parameter indication, it is required to clearly define based on which time point a spatial parameter will be applied and how to configure a time length between a reference time point and a spatial parameter application time point.

In the present disclosure, when a DCI-based joint/separate spatial parameter indication method is used for changing/updating a dynamic UL/DL spatial parameter, examples on a timeline related to spatial parameter application considering a capability/a state, etc. of a terminal are described.

Embodiment 1

This embodiment relates to an example of independently configuring an indication application timing (IAT) for a first (type) channel/signal and a second (type) channel/signal. Examples of the present disclosure are described by assuming a first channel/signal and a second channel/signal for clarity of a description, but examples of the present disclosure may be also applied equally to a determination of a spatial parameter indication and application time point for at least three distinct (or at least three types of) channels/signals.

An independent configuration may correspond to application of a first configuration value to a first channel/signal and application of a second configuration value to a second channel/signal. Here, a first configuration value and a second configuration value may be the same or different.

In addition, this embodiment may be applied to at least one of a case in which a spatial parameter is jointly indicated for a first channel/signal and a second channel/signal or a case in which a spatial parameter is separately indicated.

At least one of a first IAT configuration for a first channel/signal or a second IAT configuration for a second channel/signal may be changed/updated by a predefined (i.e., a pre-promised value is applied without signaling between a terminal and a base station), or pre-configured method (i.e., signaling between a terminal and a base station (e.g., RRC, a MAC CE, etc.)).

An IAT configuration may include a reference time point (e.g., a DCI reception (end) time point, a HARQ-ACK transmission (end) time point for a PDCCH carrying DCI, etc.), an offset value configuration (e.g., a specific time length after a reference time point), etc.

A unit of an IAT configuration may correspond to a time length, the number of slots, the number of symbols, etc.

In addition, an IAT may be configured per target channel/signal that a spatial parameter is indicated.

In the following description, it is described by collectively referring to a channel/a signal as a term called a channel for clarity, but a term called a first/second channel may be replaced with a term called a first/second signal.

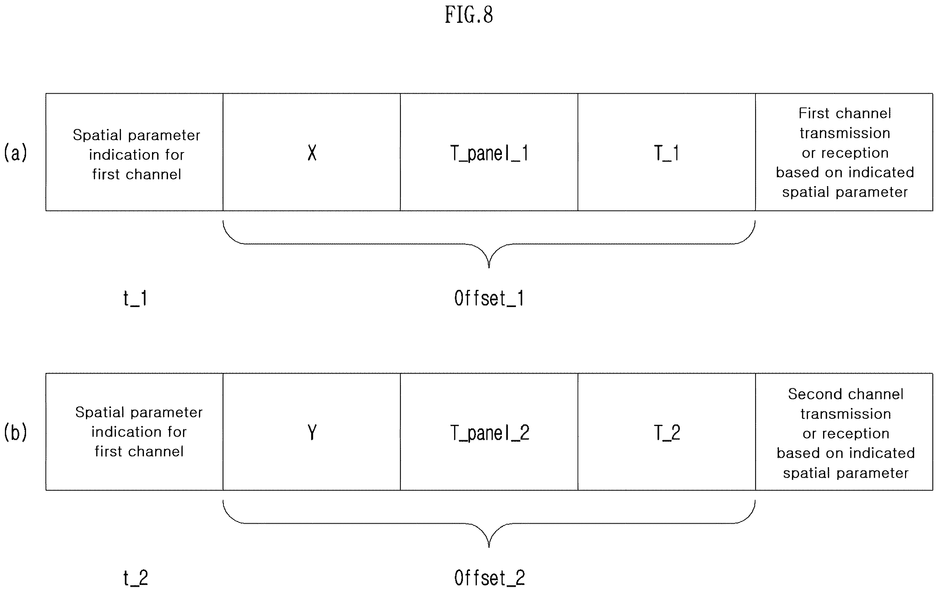

FIG. 8 is a diagram for describing a time point when a spatial parameter is applied according to an embodiment of the present disclosure.

An example of FIG. 8(a) assumes that a terminal receives a spatial parameter indication for a first channel at a time point of t_1.

X corresponds to a IAT configured for a first channel. For example, a terminal may need a X length of time to process and confirm DCI including a spatial parameter indication for a first channel.

T_Panel_1 may correspond to a time required for panel activation/switching when a terminal activates other panel, not a currently activated panel, for transmission or reception of a first channel. If a terminal uses the same panel as a currently activated panel for transmission or reception of a first channel, or for a single-panel terminal, T_Panel_1 may be 0 or may not be considered.

T_1 may correspond to a BAT configured for a first channel. For example, T_1 may be the same as the minimum value reported by a terminal (e.g., T_DL/T_UL) or may be a value configured by a base station based on the minimum value reported by a terminal (or as being equal to or greater than the minimum value).

Accordingly, a terminal may perform transmission or reception of a first channel based on an indicated spatial parameter after Offset_1 (e.g., X+T_panel_1+T_1, or X+T_1) from a time point when a spatial parameter indication is received at a time point of t_1 . During a Offset_1 time duration after the t_1, a previously configured spatial parameter or default spatial parameter may be applied for transmission or reception of a first channel.

An example of FIG. 8(b) assumes that a terminal receives a spatial parameter indication for a second channel at a time point of t_2. Here, a time point of t_2 may be the same as or different from a time point of t_1. In addition, when a time point of t_1 and a ime point of t_2 are the same, a spatial parameter for a first channel and a second channel may be indicated jointly or as a common spatial parameter, or a spatial parameter for a first channel and a second channel may be indicated separately.

Y corresponds to a IAT configured for a second channel. For example, a terminal may need a Y length of time to process and confirm DCI including a spatial parameter indication for a second channel.

T_Panel_2 may correspond to a time required for panel activation/switching when a terminal activates other panel, not a currently activated panel, for transmission or reception of a second channel. If a terminal uses the same panel as a currently activated panel for transmission or reception of a second channel, or for a single-panel terminal, T_Panel_2 may be 0 or may not be considered.

T_2 may correspond to a BAT configured for a second channel. For example, T_2 may be the same as the minimum value reported by a terminal (e.g., T_DL/T_UL) or may be a value configured by a base station based on the minimum value reported by a terminal (or as being equal to or greater than the minimum value).

Accordingly, a terminal may perform transmission or reception of a second channel based on an indicated spatial parameter after Offset_2 (e.g., Y+T_panel 2+T 2, or Y+T_2) from a time point when a spatial parameter indication is received at a time point of t_2. During a Offset_2 time duration after the t_2, a previously configured spatial parameter or default spatial parameter may be applied for transmission or reception of a second channel.

In an example of FIG. 8, a length of a duration representing X, Y, T_panel 1, T_panel_2, T_1, T_2 is irrelevant to a time length, and it should be understood that elements are just distinguished and expressed.

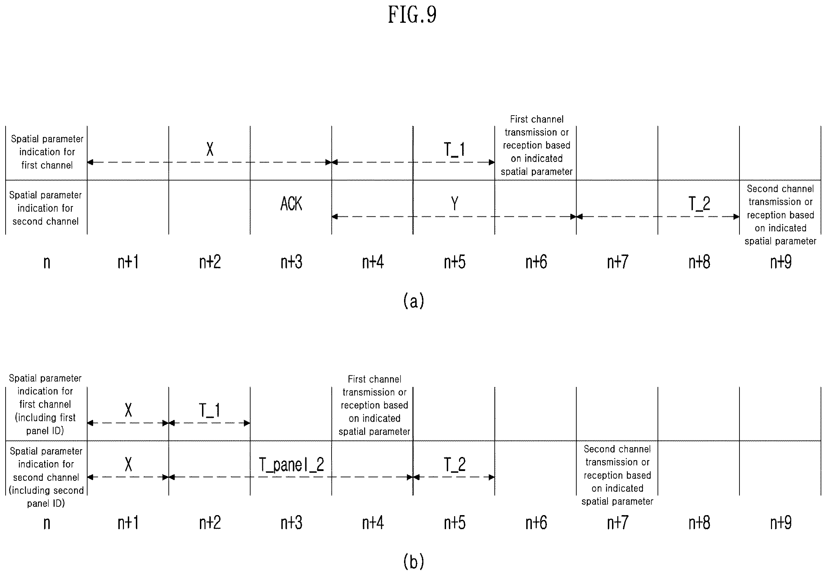

FIG. 9 is a diagram for describing a variety of examples of the present disclosure for a time point when a spatial parameter is applied.

In each example of FIG. 9(a) and (b), a spatial parameter indication for a first channel and a spatial parameter for a second channel may be indicated separately or may be indicated jointly (e.g., through one TCI state). It is assumed that an indication for a spatial parameter is received in a time unit (e.g., a slot) index n. In addition, this embodiment is just for describing relativity of a timeline, and a scope of the present disclosure is not limited by a time unit index itself.

X, a IAT for a first channel, and Y, a IAT for a second channel, may be configured independently. For example, a base station may predefine/preconfigure a value of X and Y through signaling for a terminal or without signaling between a base station and a terminal. A IAT for a first channel may be configured as X (e.g., 3) slots and a IAT for a second channel may be configured as Y (e.g., 3) slots. X and Y are illustrated as the same value, but may be configured as a different value.

T_1, a BAT for a first channel, and T_2, a BAT for a second channel, may be configured independently. For example, a terminal may report to a base station capability information (e.g., the minimum value) on T_1 and T_2. A base station may apply the minimum value as it is or may configure a BAT equal to or greater than the minimum value for a terminal. Alternatively, T_1 and T_2 may be reported and/or configured as the same one value.

For a first channel, based on a spatial parameter indication time point (e.g., slot n, a DCI reception time point), in slot n+6 after a BAT of T_1 and IAT of a X slot, transmission or reception of a first channel based on an indicated spatial parameter may be performed or transmission or reception of a first channel based on an indicated spatial parameter may be possible at a time point after slot n+6.

For a second channel, based on an ACK transmission time point for a spatial parameter indication (e.g., n+3 that HARQ-ACK for DCI is transmitted), in slot n+9 after a BAT of T_2 and IAT of a Y slot, transmission or reception of a channel based on an indicated spatial parameter may be performed or transmission or reception of a second channel based on an indicated spatial parameter may be possible at a time point after slot n+9.

As a specific example of the present disclosure, in reference to FIG. 9(a), a first channel may be a DL channel and a second channel may be a UL channel. In this case, a IAT, a time point when a DCI-based dynamic beam indication is applied, may be independently configured for a UL and a DL. For example, a IAT value for a UL and a IAT value for a DL may be configured separately and that value may be the same or different. A configuration method may be predefined or may be preconfigured by higher layer signaling, etc. For example, UL/DL beam change/update may be indicated simultaneously through a common TCI state of corresponding DCI through a joint beam indication or UL/DL beam change/update may be indicated simultaneously or at a different time point through a separate beam indication.

For example, a IAT for a DL beam indication is a X slot after receiving corresponding DCI and a IAT for a UL beam indication may operate by being configured as a Y slot after ACK of corresponding DCI. In this example, a BAT according to a corresponding beam indication may consider only T_DL, T_UL, the minimum BAT, for use of a description. In other words, a BAT configuration considering whether each of a plurality of UL/DL panels is activated is described in an example described later.

In the above-described examples, for a reference time point of spatial parameter application for a first/second channel, a DCI reception time point or an ACK transmission time point for DCI is illustratively described, but the above-described offset_1/offset_2 may be applied based on a different time point related to other spatial parameter indication (or DCI reception) time point. In addition, elements configuring an offset (i.e., X, Y, T_panel_1, T_panel 2, T_1, T_2, etc.) may be also defined or configured in various ways. For example, a reference time point for a DL beam indication may be configured as an ACK time point and a reference time point for a UL beam indication may be configured as a DCI reception time point. In addition, the same or different IAT value may be configured according to a terminal capability. T_DL/T_UL (or T_1/T_2) corresponding to the minimum BAT may be reported to a base station as a terminal capability.

In addition, despite the same DL channel, a IAT (and/or a BAT) related to spatial parameter indication application may be configured differently according to a target channel. For example, when a target channel is CORESET(s), a relatively long time of IAT may be configured by considering retransmission for a case in which a base station misses an ACK/NACK PUCCH of DCI for a beam indication. Alternatively, when a target channel is PDSCH(s), a relatively short time of IAT may be configured compared to a case in which a target channel is CORESET(s).

As an additional example, in reference to FIG. 9(a), a first channel may be a PDSCH and/or an ACK/NACK(A/N) PUCCH and a second channel may be other channel. In this case, for a PDSCH and an A/N PUCCH, PDSCH reception or A/N PUCCH transmission based on a spatial parameter indicated after offset_1 may be performed by configuring a reception time point of a spatial parameter indication as a reference point time. For other channel, transmission or reception based on a spatial parameter indicated after offset_2 may be performed by configuring an ACK transmission time point for a spatial parameter indication as a reference point time.

According to this example, a configuration for beam application indicated/updated through DCI may be divided to configure a beam application time point according to a TCI configuration more quickly and effectively. For example, in order to be indicated by DCI and applied to corresponding PDSCH scheduling and corresponding A/N PUCCH, a IAT for a PDSCH and/or A/N PUCCH beam change may apply offset_1, etc. by configuring a DCI reception time point as a refernce time point and operate to update all beams for a PUCCH (e.g., a SR/a CSI PUCCH) for other purpose, other channel, etc. by applying offset_2, etc. after ACK for corresponding DCI.

As an additional example, a PDSCH may separately apply a IAT based on a timeDurationForQCL parameter, the existing operation. And, a beam for an A/N PUCCH may be updated after a specific offset based on a DCI reception time point as in the above-described example and for the remaining channels, etc., a beam may be updated after a specific offset after ACK for DCI or the existing default operation may be followed. A IAT configuration for a PDSCH and/or an A/N PUCCH may follow a method of predefining without separate signaling. Alternatively, when a spatial parameter for a PDSCH is changed/updated after a specific offset based on the above-described DCI reception time point (or on a premise of such an operation), a spatial parameter change/update for an A/N PUCCH may be configured to be performed simultaneously with a spatial parameter change/update for a PDSCH.

Next, in an example of FIG. 9(b), a spatial parameter indication for a first channel and a spatial parameter for a second channel may be indicated separately or may be indicated jointly (e.g., through one TCI state).

An example of FIG. 9(b), compared to an example of (a), relates to a case of configuring a BAT which additionally considers an activation/switching time for a corresponding panel according to whether a terminal activates a panel corresponding to a beam indication.

A BAT according to whether a panel is activated may be configured for each of a first channel and a second channel and one integrated value may be configured for a first channel and a second channel. As a specific example, a BAT may be configured by considering a panel activation/switching delay based on a terminal capability. In other words, a BAT considering whether a panel is activated may be configured per panel (or in association with a panel ID). In addition, a BAT considering whether a panel is activated may be configured separately from T_1/T_2 as T_panel_1/T_panel_2 or may be configured as a value obtained by adding T_1/T_2 and T_panel_1/T_panel_2.

A base station may configure for a terminal an offset_1/2 value including all of IAT X/Y, T_panel_1/2 and T_1/2 for a first/second channel. A value including at least one of IAT X/Y, T_panel_1/2, or T_1/2 may be configured for a terminal. Alternatively, a base station may indicate to a terminal a time considering all of IAT X/Y, T_panel_1/2, etc. according to a beam indication as the minimum BAT or a corresponding value may be predefined.

For example, in an example of FIG. 9(b), a first channel may be a DL channel and a second channel may be a UL channel. In this case, a BAT required when changing/updating into a UL/DL beam indicated in corresponding DCI based on a IAT per UL/DL may be configured by considering an activation state of a plurality of UL/DL transmission or reception panels of a terminal.

In order to apply a BAT of a DCI beam indication differently according to whether a plurality of UL/DL panels of a terminal are activated, a base station should know whether each panel is activated. Reporting of information including whether each panel is activated may be performed by a terminal based on a beam reporting method or may be performed by utilizing a PUCCH or a PRACH, etc. for scheduling request (SR)/beam failure reporting (BFR) transmission when a panel activation state is changed (i.e., on an event basis).

When a plurality of DL reception panels exist and a plurality of UL transmission panels also exist, an activation state for panels may be different in a DL and an UL. In order to support a BAT configuration according to whether a DL and UL panel are activated by indicating it separately, a DL/UL panel identifier (ID) may be included in a joint/separate spatial parameter indication (e.g., DCI). For example, a DL/UL panel ID may be included in a common/separate TCI state.

An example of FIG. 9(b) represents an example in which both a first channel and a second channel determine a spatial parameter application time point by using a time point when a spatial parameter indication is received as a reference time point. Of course, as described above, for a first channel and/or a second channel, a spatial parameter application time point may be also determined by using an ACK time point for a spatial parameter indication as a reference time point.

In addition, it is assumed that a IAT for a first channel and a IAT for a second channel are configured as the same value X (e.g., X is 1 time unit (e.g., 1 slot)). For example, a IAT may be configured independently for a first channel and a second channel or may be integrated and configured as one value.

And, it is assumed that T_1 and T_2 are equally configured as 1 slot. For example, T_1 and T_2 may be configured independently for a first channel and a second channel or may be integrated and configured as one value.

As in the example, although a IAT for an UL/DL beam indication is the same and T_1 and T_2 are the same, a BAT to be actually applied may be different in an UL/a DL according to a beam indicated through a corresponding beam indication (e.g., a joint/common TCI state), whether a panel corresponding to it is activated, and an activation/switch delay to a corresponding beam/panel, etc.

A DL/UL panel ID as well as information on a reference RS for UL/DL beam change/update may be included in a spatial parameter indication (e.g., a common TCI state). Accordingly, beam application in a specific panel may be indicated to a terminal. In an example of FIG. 9(b), an indicated DL reception panel is already activated, so a value of T_panel_1 may be 0 or T_panel_1 may not be considered, but an indicated UL transmission panel is deactivated, so a time equivalent to T_panel_2 is additionally required to activate it. In other words, for a DL, DL reception based on a spatial parameter indicated after X+T_1 may be performed by using a DCI reception time point as a reference time point. For a UL, UL transmission based on a spatial parameter indicated after X+T_panel_ 2+T_2 may be performed by using a DCI reception time point as a reference time point.

For this configuration, a base station may configure a proper BAT to a terminal according to a IAT per UL/DL, a characteristic of a UL/DL panel, whether a panel is activated, a terminal capability, etc.

As an additional example, after a terminal reports to a base station beam switching time (BST)_1 and BST_2 as a BAT-related UE capability, a different (minimum) BAT may be defined/configured according to whether a DL/LTL panel is activated. BST_1 may be a delay value selected for a small time scope (e.g., equal to or less than/below 100 symbols) and BST_2 may be a delay value selected for a large time scope (e.g., exceed/equal to or greater than 100 symbols). For example, BST_1 may correspond to a time required for DCI decoding and beam switching when a corresponding DL/LTL panel is activated and BST_2 may correspond to a time required for DCI decoding, panel activation and beam switching when a corresponding DL/LTL panel is deactivated.

Alternatively, it may operate by indicating a time considering all of a IAT, panel activation, etc. as the minimum BAT or predefining it.

Embodiment 2

According to the above-described examples, an application time point of a newly indicated spatial parameter may be determined. Accordingly, for a channel transmitted or received before a corresponding time point, channel transmission or reception may be performed based on a previously configured spatial parameter or default spatial parameter (hereinafter, a first spatial parameter) and for a channel transmitted or received after a corresponding time point, channel transmission or reception may be performed based on a newly indicated spatial parameter (hereinafter, a second spatial parameter).

If an application time point of a second spatial parameter for a specific channel determined as described above exists between a start time point (e.g., a start symbol) and an end time point (e.g., an end symbol) of the specific channel, there is an unclear problem about which of a first and second spatial parameter is used to transmit or receive the specific channel. In this regard, specific channel transmission or reception may be performed based on at least one of the following examples.

In the following examples, it is assumed that a specific channel is a channel belonging to a first channel in the above-described examples. In addition, a start time point of a specific channel is referred to as t_start and an end time point is referred to as t_end. In addition, a spatial parameter change time point (t_change) for a first channel may correspond to a IAT (e.g., X) in the above-described examples or may correspond to a IAT+BAT (e.g., X+T_1 or X+T_panel_1+T_1).

Example 1 : Transmission or reception of a specific channel may be performed by applying a first spatial parameter from t_start to t_change or to a time unit (e.g., a symbol) including t_change and subsequently, transmission or reception of a specific channel (e.g., other channel belonging to a first channel) may be performed by applying a second spatial parameter.

Example 2 : Transmission or reception for a specific channel may be performed by applying a first spatial parameter from t_start to t_end and subsequently, transmission or reception of other channel (e.g., other channel belonging to a first channel) may be performed by applying a second spatial parameter.

Example 3 : The same specific spatial parameter configuration may be applied from t_start to t_end. For example, the specific spatial parameter may be a first spatial parameter or a second spatial parameter, and it may be predefined without separate signaling or may be configured/indicated by signaling from a base station (e.g., RRC, a MAC CE, DCI, etc.).

Example 4 : For a specific channel that t_change exists between t_start and t_end, a terminal may drop a corresponding channel and may not perform transmission or reception.

Example 5 : A terminal may not expect a case in which t_change exists between t_start and t_end. In other words, a terminal may operate except for a case in which t _change exists between t_start and t_end. A base station may configure a terminal so that t_change does not exist between t_start and t_end.

For example, for a channel (e.g., an A/N PUCCH) transmitted at a specific time point after receiving a new beam indication (e.g., DCI) or at a time point before a threshold for beamSwitchTiming (e.g., 14, 28, 48, ...), a beam which is previously indicated to a corresponding channel may be applied. For example, when a specific UL symbol exists across a threshold, it may be configured to use a beam indicated to a previous UL channel only up to a corresponding symbol or to use a newly indicated/updated beam.

One beam of a previously indicated beam or a newly indicated beam may be predefined or may be configured through higher layer signaling such as a a MAC-CE, etc. Alternatively, based on a time point when a corresponding PUCCH ends (e.g., a last symbol of a PUCCH), a beam indicated to a previous UL channel is used until then, and a newly indicated/updated beam may be used from a time point after a last symbol of a corresponding PUCCH. Alternatively, a terminal may not use a spatial parameter by dropping a corresponding PUCCH. Alternatively, because a base station may conduct UL scheduling after the threshold through the UE capability, a terminal may operate without expecting a situation when a UL symbol crosses a threshold.

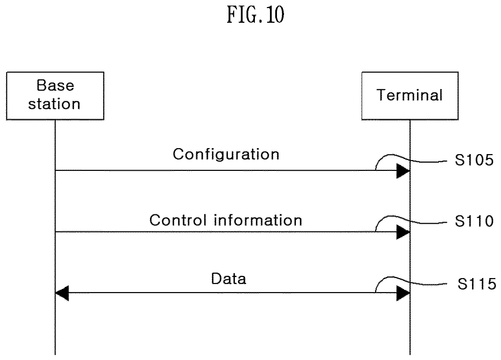

FIG. 10 is a diagram for illustrating a signaling process according to an embodiment of the present disclosure.

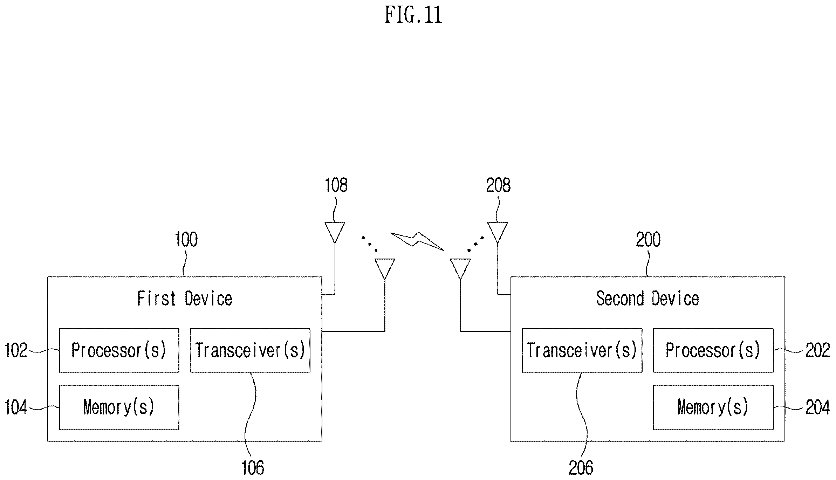

The example of FIG. 10 shows an example of signaling between a base station and a terminal (UE) to which FIG. 7, Embodiments 1, 2 and/or detailed examples thereof may be applied. Here, the UE/base station is just an example, and it may be substituted for various devices as described in FIG. 11. The base station may correspond to one base station including a plurality of TRPs or one cell including a plurality of TRPs. FIG. 10 is for convenience of description, and does not limit the scope of the present disclosure. Also, some step(s) shown in FIG. 10 may be omitted depending on circumstances and/or settings. In addition, in the operation of the base station/UE of FIG. 10, the above-described beam management and uplink/downlink transmission/reception operations may be referenced/used.

The UE may receive configuration information from the base station (S105). The configuration may include system information (SI), scheduling information, beam management (BM) related settings (e.g., DL BM related CSI-ResourceConfig IE, NZP CSI-RS resource set IE, etc.), and/or the configuration related to the base station (e.g., TRP configuration) information and the like. For example, the configuration may include a candidate of a spatial parameter for each of a variety of channels, configuration information on at least one of elements configuring an offset related to application of a spatial parameter (e.g., a IAT in FIG. 7, Embodiment 1,2 and/or detailed examples, the minimum BAT, panel activation/switching time, etc.) and others. The configuration may be transmitted through higher layer (e.g., RRC or MAC CE). In addition, when the configuration information is predefined or preconfigured, the corresponding step may be omitted.

For example, the operation of receiving the configuration, by the UE (100/200 in FIG. 11), from the base station (200/100 in FIG. 11) in the above-described step S105 may be implemented by the apparatus of FIG. 11 to be described below. For example, referring to FIG. 11, one or more processors 102 may control one or more transceivers 106 and/or one or more memories 104, etc. to receive the configuration, and one or more transceivers 106 may receive the configuration from the base station.

The UE may receive control information from the base station (S110). The control information may be received through a control channel (e.g., PDCCH). For example, the control information may be DL DCI/UL DCI. For example, the control information may include scheduling information of a downlink data channel (e.g., PDSCH)/ an uplink channel (e.g., PUCCH/PUSCH) and the like. For example, based on the above-described examples of FIG. 7, Embodiments 1, 2 and/or detailed examples thereof, The control information may be provided for a terminal through at least one DCI including common/separate spatial parameter information for each of a variety of channels.

For example, the operation of receiving the control information, by the UE (100/200 in FIG. 11), from the base station (200/100 in FIG. 11) in the above-described step S110 may be implemented by the apparatus of FIG. 11 to be described below. For example, referring to FIG. 11, one or more processors 102 may control one or more transceivers 106 and/or one or more memories 104, etc. to receive the control information, and one or more transceivers 106 may receive the control information from the base station.

The UE may receive data from the base station or transmit data to the base station (S115). The data may be received through a downlink channel (e.g., PDCCH/PDSCH) or transmitted through an uplink channel (e.g., PUCCH/PUSCH). For example, the data may be scheduled based on the control information or may be scheduled based on separate control information not shown in FIG. 10.

For example, based on FIG. 7, Embodiment 1,2 and/or detailed examples, channel transmission or reception may be performed based on a specific spatial parameter at least after a specific offset from a specific reference time point for a specific channel. A description for the above-described examples may be applied to a variety of examples of an indication method of a specific spatial parameter for a specific channel, a variety of examples of a reference time point and a variety of examples of elements configuring an offset.

For example, the operation of transmitting/receiving the data, by the UE (100/200 in FIG. 11), to/from the base station (200/100 in FIG. 11) in the above-described step S115 may be implemented by the apparatus of FIG. 11 to be described below. For example, referring to FIG. 11, one or more processors 102 may control one or more transceivers 106 and/or one or more memories 104, etc. to transmit/receive the data, and one or more transceivers 106 may transmit/receive the data to/from the base station.

As mentioned above, the above-described base station/UE signaling and operation (e.g., examples of FIG. 7, Embodiments 1, 2 and/or detailed examples thereof) may implemented by the apparatus of FIG. 11 to be described below. For example, the base station (e.g., TRP 1/TRP 2) may correspond to the first wireless device, the UE may correspond to the second wireless device, and vice versa may be considered in some cases.

For example, the base station/UE signaling and operation (e.g., examples of FIG. 715, Embodiments 1, 2 and/or detailed examples thereof) described above may be processed by one or more processors (e.g., 102, 202) of FIG. 11, and the above-described base station/UE signaling and operation (e.g., examples of FIG. 7, Embodiments 1, 2 and/or detailed examples thereof) may be stored in a memory (e.g., one or more memories 104 and 204 of FIG. 11) in the form of an instruction/program (e.g., instruction, executable code) for driving at least one processor of FIG. 11 (e.g., 102 and 202).

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of transmitting or receiving a channel by a terminal in a wireless communication system, the method comprising:

   receiving from a base station at least one downlink control information (DCI) including first spatial parameter information for a first channel and second spatial parameter information for a second channel;
   performing transmission or reception for the first channel based on the first spatial parameter information at least after a first offset from a first reference time point; and
   performing transmission or reception for the second channel based on the second spatial parameter information at least after a second offset from a second reference time point.

2. The method of claim 1, wherein:

   the first offset includes at least one of a first indication application timing, a first minimum beam application timing, or a first panel activation timing,
   the second offset includes at least one of a second indication application timing, a second minimum beam application timing, or a second panel activation timing.

3. The method of claim 1, wherein:
   the first indication application timing and the second indication application timing are predefined or preconfigured separately or jointly.

4. The method of claim 1, wherein:
   at least one of at least one of the first minimum beam application timing or the first panel activation timing, or at least one of the second minimum beam application timing or the first panel activation timing is preconfigured or predefined based on capability reporting of the terminal.

5. At least one of the first reference time point or the second reference time point corresponds to a time point when the at least one DCI is received last.

6. The method of claim 1, wherein:
   at least one of the first reference time point or the second reference time point corresponds to a time point when HARQ-ACK (hybrid automatic repeat request-acknowledgement) information for the at least one DCI is transmitted.

7. The method of claim 1, wherein:
   the first channel includes a downlink channel and the second channel includes an uplink channel.

8. The method of claim 1, wherein:
   the first channel includes a physical downlink shared channel (PDSCH) and an ACK(acknowledgement)/NACK(non-acknowledgement) physical uplink control channel (PUCCH) and the second channel includes at least one channel other than the first channel.

9. The method of claim 1, wherein based on a time point after the first offset being positioned between a start time point and an end time point of the first channel:

   transmission or reception of the first channel is performed based on a previous spatial parameter from the start time point to the time point after the first offset,
   transmission or reception of the first channel is performed based on the first spatial parameter from the time point after the first offset to the end time point.

10. The method of claim 1, wherein based on a time point after the first offset being positioned between a start time point and an end time point of the first channel:

    transmission or reception of the first channel is performed based on a previous spatial parameter from the start time point to the end time point,
    the first spatial parameter is applied to additional transmission or reception of the first channel after the end time point.

11. The method of claim 1, wherein based on a time point after the first offset being positioned between a start time point and an end time point of the first channel:
    transmission or reception of the first channel is performed based on the first spatial parameter from the start time point to the end time point.

12. The method of claim 1, wherein:
    based on a time point after the first offset being positioned between a start time point and an end time point of the first channel, transmission or reception for the first channel is not performed.

13. The method of claim 1, wherein:
    the first spatial parameter information and the second spatial parameter information are jointly indicated through one DCI.

14. The method of claim 1, wherein:
    the first spatial parameter information and the second spatial parameter information are separately indicated through each DCI.

15. A terminal for performing channel transmission or reception in a wireless communication system, the terminal comprising:

    at least one transceiver; and
    at least one processor connected to the at least one transceiver,
    wherein the at least one processor is configured to:
    receive through the at least one transceiver from a base station at least one downlink control information (DCI) including first spatial parameter information for a first channel and second spatial parameter information for a second channel;
    perform through the at least one transceiver transmission or reception for the first channel based on the first spatial parameter information at least after a first offset from a first reference time point; and

perform through the at least one transceiver transmission or reception for the second channel based on the second spatial parameter information at least after a second offset from a second reference time point.

16. A method of performing channel transmission or reception by a base station in a wireless communication system, the method comprising:

transmitting to a terminal at least one downlink control information (DCI) including first spatial parameter information for a first channel and second spatial parameter information for a second channel;
performing transmission or reception for the first channel based on the first spatial parameter information at least after a first offset from a first reference time point; and
performing transmission or reception for the second channel based on the second spatial parameter information at least after a second offset from a second reference time point.

17. A base station for transmitting or receiving a channel in a wireless communication system, the base station comprising:

at least one transceiver; and
at least one processor connected to the at least one transceiver,
wherein the at least one processor is configured to:
transmit to a terminal through the at least one transceiver at least one downlink control information (DCI) including first spatial parameter information for a first channel and second spatial parameter information for a second channel;
perform through the at least one transceiver transmission or reception for the first channel based on the first spatial parameter information at least after a first offset from a first reference time point; and
perform through the at least one transceiver transmission or reception for the second channel based on the second spatial parameter information at least after a second offset from a second reference time point.

18. A processing unit configured to control a terminal transmitting or receiving a channel in a wireless communication system, the processing unit comprising:

at least one processor; and
at least one computer memory which is operably connected to the at least one processor and stores instructions performing operations based on being executed by the at least one processor,
wherein the operations include:

receiving from a base station at least one downlink control information (DCI) including first spatial parameter information for a first channel and second spatial parameter information for a second channel;
performing transmission or reception for the first channel based on the first spatial parameter information at least after a first offset from a first reference time point; and
performing transmission or reception for the second channel based on the second spatial parameter information at least after a second offset from a second reference time point.

19. At least one non-transitory computer readable medium storing at least one command, wherein:

the at least one instruction controls a device which performs transmission or reception of a channel in a wireless communication system by being executed by at least one processor to:

receive from a base station at least one downlink control information (DCI) including first spatial parameter information for a first channel and second spatial parameter information for a second channel;
perform transmission or reception for the first channel based on the first spatial parameter information at least after a first offset from a first reference time point; and

perform transmission or reception for the second channel based on the second spatial parameter information at least after a second offset from a second reference time point.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

FIG.4

FIG.5

Resource grid

A carrier
(up to 3300 subcarriers,i.e.,275 RBs)

A BWP

1 RB=12 subcarrier

1 RE

1 subcarrier

1 Symbol

k=0

l=0 .....

FIG.6

INITIAL CELL SEARCH    SYSTEM INFORMATION RECEPTION    RANDOM ACCESS PROCEDURE    GENERAL DL/UL Tx/Rx

PSS/SSS& [DLRS]& PBCH    PDCCH/ PDSCH (BCCH)    PRACH    PDCCH/ PDSCH    PUSCH    PDCCH/ PDSCH    PDCCH/ PDSCH    PUSCH/ PUCCH

S601    S602    S603    S604    S605    S606    S607    S608

· DL/UL ACK/NACK
· UE CQI/PMI RI REPORT
  USING PUSCH AND PUCCH

# FIG. 7

Start

Provide at least one DCI including first spatial parameter information for first channel and second spatial parameter information for second channel — S710

Transmit or receive first channel based on first spatial parameter at least after first offset from first reference time point — S720

Transmit or receive second channel based on second spatial parameter at least after second offset from second reference time point — S730

End

## FIG.8

(a)

| Spatial parameter indication for first channel | X | T_panel_1 | T_1 | First channel transmission or reception based on indicated spatial parameter |
|---|---|---|---|---|

t_1                           Offset_1

(b)

| Spatial parameter indication for first channel | Y | T_panel_2 | T_2 | Second channel transmission or reception based on indicated spatial parameter |
|---|---|---|---|---|

t_2                           Offset_2

# FIG.9

(a)

(b)

FIG.10

EP 4 280 471 A1

# FIG.11

## INTERNATIONAL SEARCH REPORT

| International application No. |
|---|
| **PCT/KR2022/000606** |

**A.    CLASSIFICATION OF SUBJECT MATTER**

**H04B 7/06**(2006.01)i; **H04B 7/08**(2006.01)i; **H04W 72/12**(2009.01)i; **H04W 72/04**(2009.01)i

According to International Patent Classification (IPC) or to both national classification and IPC

**B.    FIELDS SEARCHED**

Minimum documentation searched (classification system followed by classification symbols)

H04B 7/06(2006.01); H04L 1/18(2006.01); H04L 5/00(2006.01); H04W 24/08(2009.01); H04W 72/04(2009.01); H04W 72/12(2009.01); H04W 76/27(2018.01); H04W 80/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공간 파라미터 정보(spatial parameter information), 오프셋(offset), 기준 시점 (reference time point), 채널(channel), 하향링크 제어 정보(downlink control information)

**C.    DOCUMENTS CONSIDERED TO BE RELEVANT**

| Category* | Citation of document, with indication, where appropriate, of the relevant passages | Relevant to claim No. |
|---|---|---|
| X | US 2019-0313429 A1 (FG INNOVATION COMPANY LIMITED) 10 October 2019 (2019-10-10) See paragraphs [0040]-[0042], [0055]-[0058], [0069] and [0073]-[0075]; and figures 1-4. | 1-5,9-12,14-19 |
| Y | | 6-8,13 |
| Y | WO 2019-143900 A1 (NTT DOCOMO, INC. et al.) 25 July 2019 (2019-07-25) See paragraph [0039]; and figures 2-9. | 6 |
| Y | FRAUNHOFER IIS et al. Enhancements on UE multi-beam operation. R1-1907052, 3GPP TSG RAN WG1 Meeting #97. Reno, USA. 03 May 2019. See section 3. | 7-8,13 |
| A | US 2020-0314880 A1 (CIRIK, Ali Cagatay et al.) 01 October 2020 (2020-10-01) See paragraphs [0430]-[0484]; and figures 17-28. | 1-19 |
| A | US 2020-0288479 A1 (IDAC HOLDINGS, INC.) 10 September 2020 (2020-09-10) See paragraphs [0103]-[0163]; and figures 3-9. | 1-19 |

☐ Further documents are listed in the continuation of Box C.    ☑ See patent family annex.

\* Special categories of cited documents:
"A"  document defining the general state of the art which is not considered to be of particular relevance
"D"  document cited by the applicant in the international application
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **29 April 2022** | **02 May 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/000606**

| Patent document cited in search report | | | Publication date (day/month/year) | Patent family member(s) | | | Publication date (day/month/year) |
|---|---|---|---|---|---|---|---|
| US | 2019-0313429 | A1 | 10 October 2019 | CN | 112586038 | A | 30 March 2021 |
| | | | | EP | 3777407 | A1 | 17 February 2021 |
| | | | | EP | 3777407 | A4 | 05 January 2022 |
| | | | | US | 10863511 | B2 | 08 December 2020 |
| | | | | US | 11057891 | B2 | 06 July 2021 |
| | | | | US | 2019-0313390 | A1 | 10 October 2019 |
| | | | | WO | 2019-196750 | A1 | 17 October 2019 |
| | | | | WO | 2019-196751 | A1 | 17 October 2019 |
| WO | 2019-143900 | A1 | 25 July 2019 | CN | 111615805 | A | 01 September 2020 |
| | | | | EP | 3741066 | A1 | 25 November 2020 |
| | | | | JP | 2021-512528 | A | 13 May 2021 |
| | | | | US | 2020-0359459 | A1 | 12 November 2020 |
| US | 2020-0314880 | A1 | 01 October 2020 | EP | 3716716 | A1 | 30 September 2020 |
| | | | | EP | 3716716 | B1 | 01 December 2021 |
| US | 2020-0288479 | A1 | 10 September 2020 | CN | 111543097 | A | 14 August 2020 |
| | | | | EP | 3711411 | A1 | 23 September 2020 |
| | | | | KR | 10-2020-0096763 | A | 13 August 2020 |
| | | | | WO | 2019-099659 | A1 | 23 May 2019 |

Form PCT/ISA/210 (patent family annex) (July 2019)